# EUROPEAN PATENT SPECIFICATION

(11) **EP 4 585 449 B1**
(45) Date of publication and mention of the grant of the patent: **03.06.2026**
(21) Application number: 24151500.6
(22) Date of filing: 12.01.2024
(51) Int. Cl.: B60L 53/14, B60L 53/30, B60L 53/65, B60L 53/66, G06Q 30/018, G06Q 50/06, G06Q 50/40, H02J 7/47, G06Q 30/06, H02J 7/00, H04L 9/40

(54) **METHOD FOR AN APPARATUS OF A VEHICLE, APPARATUS, VEHICLE AND COMPUTER PROGRAM**
VERFAHREN FÜR EINE VORRICHTUNG EINES FAHRZEUGS, VORRICHTUNG, FAHRZEUG UND COMPUTERPROGRAMM
PROCÉDÉ POUR UN APPAREIL D'UN VÉHICULE, APPAREIL, VÉHICULE ET PROGRAMME INFORMATIQUE

(43) Date of publication of application: 16.07.2025
(73) Proprietor: Bayerische Motoren Werke Aktiengesellschaft, 80809 München (DE)
(72) Inventor: Heidmann, Fanny, 80796 München (DE); Milushev, Alexandar, 85560 Ebersberg (DE)

(56) References cited:
- EP-A1- 3 147 153
- US-A1- 2022 069 602
- US-A1- 2023 133 680
- US-A1- 2023 237 861

## Description

The present disclosure relates to the field of digital vehicle access. Embodiments relate to a method for an apparatus of the vehicle, a vehicle and a computer program.

Existing systems for charging a vehicle at a charging terminal may require a user of the vehicle to perform certain actions. For example, the user has to authenticate at the charging terminal, open the charging flap of the vehicle, connect a charging cable, etc. The actions the user to perform may be time-consuming and/or may decrease the user experience. Thus, there may be a need to improve a charging process of a vehicle at the charging terminal.

US 2023/237861 A1 discusses a vehicle-side solution where an authorized user is verified and the charging port flap is mechanically locked or unlocked accordingly.

US 2022/069602 A1 discloses communication protocols and backend-driven authorization for starting a charging session. Paragraphs 88 and 89, together with 126 and 127, detail how an electric vehicle, the charging station, and a backend operator exchange authorization messages and session initiation signals. The outcome of those exchanges is the enabling or disabling of charging current by the EVSE.

EP 3 147 153 A1 a mobile device (100) for controlling the charging of electric vehicles, comprising: a first communication module (110) to for establishing a short-range wireless communication with a charging station (EVSE); a processing unit (120) configured for: sending a first operating signal (OS1) to said charging station (EVSE), via said first communication module (110), for enabling a charging of an electric vehicle (EV); sending a second operating signal (OS2) to said charging station (EVSE), via said first communication module (110), for ending said recharging.

It is therefore a finding that a charging process can be improved by generating a control signal for triggering an action related to a charging process of the vehicle. The control signal is generated based on authentication data. Using authentication data may allow to automate a step of a charging process, such that time required for the charging process can be reduced and/or a user experience can be improved.

Examples provide a method for executing by an apparatus of a vehicle. The method comprises obtaining authentication data indicative of an authentication of the user at a charging terminal. Further, the method comprises generating a control signal for triggering an action related to a charging process of the vehicle. The generation of the control signal is based on the authentication data. An action related to the charging process may be an action related to the vehicle, e.g., opening a charging flap and/or an action related to a component external to the vehicle, e.g., triggering a movement of a charging robot. Using the authentication data may allow to verify if a user is authorized to use a service of the charging terminal. When the user is authorized to use the service of the charging terminal the charging process can be facilitated, e.g., using a charging robot and/or opening a charging flap of the vehicle.

In an example, the control signal may be for unlocking a charging flap of the vehicle. In this way, a charging flap of the vehicle can be opened by the apparatus of the vehicle if an intent to charge the vehicle is determined based on the authentication data. For example, an authentication of the user at the charging terminal may be indicative of the charging intent of the user.

In an example, the method may comprise obtaining position data indicative of a position of the user and generating the control signal based on the position data. Using the position data may allow to improve a determination of a usage time of the charging terminal, e.g., a time of a step of the charging process. For example, the charging flap may be only unlocked if the user is outside of the vehicle. For example, the control signal may trigger an unlocking of the charging flap, when the user leaves the vehicle. In this way, a unnecessary early triggered action can be avoided.

The method further comprises obtaining intention data indicative of an intention of the user to use the charging terminal and generating the control signal based on the intention data. The intention data may allow to improve the determination of an intended usage of the charging terminal. For example, the intention data may be indicative of a usage of the charging cable by the user. That is, the intention data may indicate an intention of the user to charge the vehicle. Using the intention data may allow to improve a generation of the control signal.

In an example, the method may comprise obtaining identity data indicative of an identity of the user in a surrounding of the vehicle and generating the control signal based on the identity data. Using identity data may allow to generate the control signal only if a user is authorized to charge the vehicle.

In an example, the authentication data may be received from user equipment of the user of the vehicle and/or the charging terminal. In this way, the authentication data can be obtained in a facilitated way.

The intention data is obtained from a camera of the vehicle. In this way, the intention data can be obtained in a facilitated way.

Examples relate to an apparatus, comprising interface circuitry configured to communicate with user equipment and/or a charging terminal and processing circuitry configured to perform a method as described above. Examples relate to a vehicle, comprising an apparatus as described above.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
- Fig. 1: shows an example of a method for executing by an apparatus of a vehicle; and
- Fig. 2: shows a block diagram of an example of an apparatus, e.g., for a vehicle.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

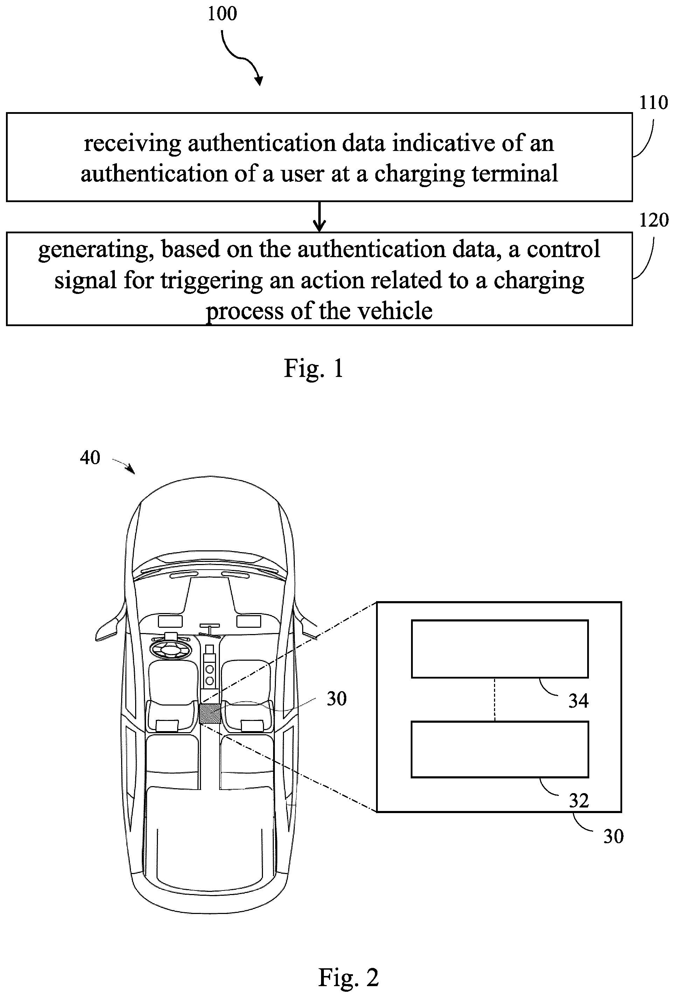

Fig. 1 shows an example of a method 100 for executing by an apparatus of a vehicle. The method 100 comprises obtaining 110 authentication data indicative of an authentication of the user at a charging terminal. The authentication data may be received from user equipment, e.g., user equipment of a user using the vehicle such like a driver, a passenger and/or from a charging terminal, for example. For example, a user may use his user equipment to authenticate at the charging terminal. In this case, the user equipment may transmit an acknowledgment signal to the vehicle, e.g., the apparatus of the vehicle or a receiver of the vehicle (the apparatus may be external to the receiver, such that the apparatus may receive the authentication data from the receiver of the vehicle). Optionally or alternatively, the charging terminal may transmit an acknowledgment signal to the vehicle, e.g., the apparatus of the vehicle or a receiver of the vehicle. Optionally or alternatively, the authentication data may be retrieved from a storage device of the vehicle, e.g., a storage device part of the apparatus.

The authentication data is indicative of an authentication of the user at the charging terminal. For example, the authentication data may allow an identification of the user and/or to prove a payment for the charging process by the user. That is, the authentication data may be indicative of an enabled charging process for the user. For example, the authentication data can be assigned to a specific user. In this way, an authorization of the user to use the charging terminal can be verified by the authentication data.

Further, using authentication data may allow to improve the determination of the intention of the user to use the charging terminal. Thus, the authentication data can be used to improve the charging process. Therefore, the method 100 comprises generating 120 a control signal for triggering an action related to a charging process of the vehicle. The generation of the control signal is based on the authentication data. An action related to a charging process may be an action related to the vehicle. In this case, the control signal can be transmitted to an actor of the vehicle. Alternatively, the actor may be part of the apparatus and the apparatus may control the actor. For example, the action related to the charging process may be an unlocking or an opening of a charging flap and/or a trunk flap. For example, the user may want to access the trunk during the charging process to unload a charging cable. Thus, by opening the trunk and/or the charging flap in advance, a charging process can be improved and/or a user experience can be improved. Optionally or alternatively, an action related to the charging process may be an action related to a component or a device external to the vehicle. For example, the control signal may be transmitted to a charging robot configured to connect a charging cable with the vehicle. In this way, an action of the charging robot can be triggered by transmitting the control signal to the charging robot.

Due to hardware and/or software limitations, a prediction of the intention of the user of charging the vehicle with 100% accuracy is hard or even impossible. This might lead to false or missing events such like openings of a flap or a trunk. Such false positive events and/or missing events can be reduced by the method 100. It is a finding of the inventors that an additional indicator, the authentication data, can be used to increase in accuracy of determining the intention of the user. In this way, false positive events or missing events can be reduced or even avoided.

The authentication data can be used to pre-activate a function to perform an action related to the charging process, e.g., for automatically opening the charging flap, controlling a charging robot. In this way, when the user enters the charging zone, and when the user is already authenticated at the charging terminal, the action related to the charging process can be triggered. For example, the action related to the charging process can be triggered in substantially 100% of the cases when the user is authenticated at the charging terminal.

There may be multiple possibilities to receive 110 the authentication data. For example, the authentication data may be retrieved from a storage device of the vehicle, e.g., a storage device part of the apparatus. For example, a user of the vehicle may be authenticated using a digital key. Further, the user may have used a charging terminal before and is authorized to use the charging terminal. In this case, the apparatus may transmit an authentication signal to the charging terminal to initiate charging process. Based on the transmitted authentication signal the apparatus may determine the authentication data. That is, the apparatus can determine the authentication data based on information transmitted to the charging terminal (or alternatively to user equipment). Optionally or alternatively, the authentication data may be received from user equipment of the user of the vehicle. For example, the user equipment may store a digital key to authenticate a user of the user equipment. In this way, when a charging process may be initiated using the user equipment of the user, e.g., the user authenticates with a digital method such like scanning a QR-code, the use of the charging terminal, the user equipment can transmit information about the initiation of the charging process to the vehicle. An integrity of the authentication data can be secured by the digital key of the user equipment. Optionally or alternatively, the charging terminal may transmit the authentication data to the vehicle. That is, the authentication data may be received from the charging terminal.

In an example, the control signal may be for unlocking a charging flap of the vehicle. That is, the control signal may be related to a component of the vehicle. Unlocking the charging flap of the vehicle may be necessary for every charging process involving a charging cable. By unlocking the charging flap a charging cable can be connected with the vehicle.

However, the determination of a time of usage of the unlocked charging flap, or the respective accessible charging plug, may depend on a user characteristic. Therefore, generating the control signal, e.g., to unlock the charging flap, may depend on further trigger. For example, the further trigger may be position data and/or intention data.

Thus, in an example, the method 100 may comprise obtaining position data indicative of a position of the user and generating the control signal based on the position data. Using the position data may allow to trigger the action related to the charging process with respect to an actual user position. For example, unlocking the charging flap may be triggered when a distance of the user to the charging flap is less than a threshold distance. That is, the control signal can be generated when the user is within the threshold distance to the charging flap. In this way, triggering the action related to the charging process can be adapted to an actual use case. Thus, a time of triggering the action related to the charging process can be improved.

The method 100 comprises obtaining intention data indicative of an intention of the user to use the charging terminal and generating the control signal based on the intention data. The intention data may allow to improve the determination of an intention to initiate a charging process using the charging terminal. For example, the user may unload a charging cable of the trunk of the vehicle. Unloading the charging cable may be indicative of an intention to initiate a charging process. Thus, the generation of the control signal can be based on the trigger event such like unloading the charging cable.

In an example, the method may comprise obtaining identity data indicative of an identity of the user in a surrounding of the vehicle and generating the control signal based on the identity data. For example, the identity data may be received from user equipment of a user. For example, the identity data may be indicative of a digital key. Optionally or alternatively, the identity data may be measured, e.g., using the sensor of the vehicle. Thus, the apparatus may receive sensor data from a sensor of the vehicle. For example, face recognition can be used to determine an identity of a person in the surroundings of the vehicle. The identity data may allow to prove an authorization of the user in the surrounding of the vehicle to charge the vehicle. For example, a user without an authorization may unload the charging cable. In this case, no action related to the charging process may be triggered.

In an example, the authentication data may be received from user equipment of the user of the vehicle and/or the charging terminal. In this way, the authentication data can be obtained in a facilitated way. The intention data is obtained from a camera of the vehicle. In this way, the intention data can be obtained in a facilitated way.

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2).

Fig. 2 shows a block diagram of an example of an apparatus 30, e.g., for a vehicle 40. The apparatus 30 comprises interface circuitry 32 configured to communicate with user equipment and/or a charging terminal and processing circuitry 34 configured to perform a method as described above, e.g., the method for executing by an apparatus as described with reference to Fig. 1. For example, the apparatus 30 may be part of the vehicle 40, e.g., part of a control unit of the vehicle 40.

For example, the vehicle 40 may be a land vehicle, such as a road vehicle, a car, an automobile, an off-road vehicle, a motor vehicle, a bus, a robo-taxi, a van, a truck or a lorry. Alternatively, the vehicle 40 may be any other type of vehicle, such as a train, a subway train, a boat or a ship. For example, the proposed concept may be applied to public transportation (trains, bus) and future means of mobility (e.g., robo-taxis).

As shown in Fig. 2 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method described above.

In examples the interface circuitry 32 may correspond to any means for obtaining, receiving, transmitting or providing analog or digital signals or information, e.g., any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 2 may comprise one or more optional additional features corresponding to one or more aspects mentioned in connection with the proposed concept or one or more examples described above (e.g., Fig. 1).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The aspects and features described in relation to a particular one of the previous examples may also be combined with one or more of the further examples to replace an identical or similar feature of that further example or to additionally introduce the features into the further example.

## Claims

1. A method for executing by an apparatus of a vehicle, comprising:
obtaining authentication data indicative of an authentication of a user at a charging terminal;
obtaining intention data indicative of an intention of the user to use the charging terminal; and
generating, based on the authentication data and the intention data, a control signal for triggering an action related to a charging process of the vehicle, wherein
the intention data is obtained from a camera of the vehicle.

2. The method according to claim 1, wherein
the control signal is for unlocking a charging flap of the vehicle.

3. The method according to any one of the preceding claims, further comprising:
obtaining position data indicative of a position of the user, and
wherein the control signal is generated based on the authentication data, the intention data and the position data.

4. The method according to any one of the preceding claims, further comprising:
obtaining identity data indicative of an identity of the user in a surrounding of the vehicle, and
wherein the control signal is generated based on the authentication data, the intention data and the identity data.

5. The method according to any one of the preceding claims, wherein
the authentication data is received from at least one of user equipment of the user of the vehicle or the charging terminal.

6. An apparatus (30), comprising:
interface circuitry (32) configured to communicate with at least one of user equipment and a charging terminal; and
processing circuitry (34) configured to perform a method according to any of the preceding claims.

7. A vehicle comprising the apparatus according to claim 6, and a camera configured to obtain the intention data.

8. A computer program having a program code for performing the method according to claim 1 - 5, when the computer program is executed on a computer, a processor, or a programmable hardware component.

## Patentansprüche

1. Verfahren zur Ausführung durch eine Vorrichtung eines Fahrzeugs, umfassend:
Erhalten von Authentifizierungsdaten, die eine Authentifizierung eines Benutzers an einem Ladeterminal anzeigen;
Erhalten von Intentionsdaten, die eine Intention des Benutzers anzeigen, das Ladeterminal zu benutzen; und
Erzeugen, basierend auf den Authentifizierungsdaten und den Intentionsdaten, eines Steuersignals zum Auslösen einer Aktion in Bezug auf einen Ladevorgang des Fahrzeugs, wobei
die Intentionsdaten von einer Kamera des Fahrzeugs erhalten werden.

2. Verfahren nach Anspruch 1, wobei
das Steuersignal zum Entriegeln einer Ladeklappe des Fahrzeugs dient.

3. Verfahren nach einem der vorhergehenden Ansprüche, ferner umfassend:
Erhalten von Positionsdaten, die eine Position des Benutzers anzeigen, und
wobei das Steuersignal basierend auf den Authentifizierungsdaten, den Intentionsdaten und den Positionsdaten erzeugt wird.

4. Verfahren nach einem der vorhergehenden Ansprüche, ferner umfassend:
Erhalten von Identitätsdaten, die eine Identität des Benutzers in einer Umgebung des Fahrzeugs anzeigen, und
wobei das Steuersignal basierend auf den Authentifizierungsdaten, den Intentionsdaten und den Identitätsdaten erzeugt wird.

5. Verfahren nach einem der vorhergehenden Ansprüche, wobei
die Authentifizierungsdaten von zumindest einem von Benutzerausrüstung des Benutzers des Fahrzeugs oder dem Ladeterminal empfangen werden.

6. Vorrichtung (30), umfassend:
Schnittstellenschaltung (32), die konfiguriert ist, mit zumindest einem von Benutzerausrüstung und einem Ladeterminal zu kommunizieren; und
Verarbeitungsschaltung (34), die konfiguriert ist, ein Verfahren nach einem der vorhergehenden Ansprüche durchzuführen.

7. Fahrzeug, umfassend die Vorrichtung nach Anspruch 6 und eine Kamera, die konfiguriert ist, die Intentionsdaten zu erhalten.

8. Computerprogramm mit einem Programmcode zur Durchführung des Verfahrens nach Anspruch 1 - 5, wenn das Computerprogramm auf einem Computer, einem Prozessor oder einer programmierbaren Hardwarekomponente ausgeführt wird.

## Revendications

1. Procédé d'exécution par un appareil d'un véhicule, comprenant :
l'obtention de données d'authentification indiquant une authentification d'un utilisateur à une borne de recharge ;
l'obtention de données d'intention indiquant une intention de l'utilisateur d'utiliser la borne de recharge ; et
la génération, sur la base des données d'authentification et des données d'intention, d'un signal de commande pour déclencher une action relative à un processus de recharge du véhicule, dans lequel
les données d'intention sont obtenues à partir d'une caméra du véhicule.

2. Procédé selon la revendication 1, dans lequel
le signal de commande est destiné à déverrouiller un clapet de recharge du véhicule.

3. Procédé selon l'une quelconque des revendications précédentes, comprenant en outre :
l'obtention de données de position indiquant une position de l'utilisateur, et
dans lequel le signal de commande est généré sur la base des données d'authentification, des données d'intention et des données de position.

4. Procédé selon l'une quelconque des revendications précédentes, comprenant en outre :
l'obtention de données d'identité indiquant une identité de l'utilisateur dans un environnement du véhicule, et
dans lequel le signal de commande est généré sur la base des données d'authentification, des données d'intention et des données d'identité.

5. Procédé selon l'une quelconque des revendications précédentes, dans lequel
les données d'authentification sont reçues d'au moins l'un parmi un équipement d'utilisateur de l'utilisateur du véhicule ou la borne de recharge.

6. Appareil (30), comprenant :
un circuit d'interface (32) configuré pour communiquer avec au moins l'un parmi un équipement d'utilisateur et une borne de recharge ; et
un circuit de traitement (34) configuré pour exécuter un procédé selon l'une quelconque des revendications précédentes.

7. Véhicule comprenant l'appareil selon la revendication 6 et une caméra configurée pour obtenir les données d'intention.

8. Programme d'ordinateur ayant un code de programme pour exécuter le procédé selon la revendication 1 - 5, lorsque le programme d'ordinateur est exécuté sur un ordinateur, un processeur ou un composant matériel programmable.
